# EUROPEAN PATENT APPLICATION

(11) **EP 1 349 061 A1**
(43) Date of publication of application: **01.10.2003**
(21) Application number: 02354051.1
(22) Date of filing: 27.03.2002
(51) Int. Cl.: G06F 9/445

(54) **Server based hardware control for internet applications**

(71) Applicant: Hewlett-Packard Company, Palo Alto, CA 94304 (US)
(72) Inventor: Combe, Jean-Michel, 38420 Domene (FR)
(74) Representative: Lloyd, Richard Graham

(57) **Abstract**

A method and a system for providing a network-based service to a plurality of different hardware brands. The system may include a server (112) and a plug-in application (216). The server may be configured to serve (333) at least one web page including a hardware compatibility link to a user browser (325) and interface with the user browser. The plug-in application may be configured to receive user hardware information from the user browser (325) and configure itself (335) to interact with the user hardware according to the received hardware information. The method may include transmitting a link (410) requesting user hardware information to a user browser, receiving (420) the user hardware information; configuring (430) the service according to the received user hardware information, and providing the network-based service (440) according to the received user hardware information. The method may also include controlling the user hardware to interact with the service.

## Description

### FIELD OF THE INVENTION

The invention is generally related to Internet software applications. More particularly, the invention is related to integration of Internet software with user hardware devices.

### BACKGROUND OF THE INVENTION

As networks grow and evolve, the types of services available to users of networks, such as, the Internet, is also growing. Many of the available network-based services typically interface with hardware connected to user computer systems. For example, some Internet-based services provide services that require or would benefit from interfacing with cameras, such as digital cameras, i.e. webcams, associated with a user computer system.

Since many different firms may provide network-based services for each type of network compatible device or hardware, such as webcams, it is not efficient for manufacturers of network compatible hardware to adapt their devices to be used with every available service on a network. Thus, a user may be responsible for hardware compatibility. Thus, a user may need to first install a driver for the hardware, exchange data between applications and the hardware, and then, install an application allowing the user to use the hardware. For example, for a webcam, the application may allow a user to record images at a specified rate, such as thirty frames per second.

The application may display a user interface including buttons. The buttons may be configured to allow the user to select a button in order to perform an action. When the button is selected, a request is transmitted to the device to perform an action, e.g., start sending data. In the example of the webcam, the application transmits the request through the driver to the device so that the application will receive pictures at a rate of thirty frames per second. A disadvantage to the described approach is that a user may need to install a new application and learn how to use the new application each time a new piece of network compatible hardware is connected to the computer.

### SUMMARY OF THE INVENTION

A method and system of providing a network-based service is described. The method may include transmitting to the user browser a link for launching a plug-in for configuring the user hardware according to configuration information associated with the link; configuring a service according to the configuration information; and providing a service using the user hardware.

The method may include transmitting a link requesting user hardware information to a user browser, receiving the user hardware information and configuring a service according to the received user hardware information.

The system may include a server serving at least one web page including a hardware compatibility link to a user browser and interfacing with a user browser and a plug-in application. The plug-in application may be configured to receive user hardware information from the user browser and configure itself to interact with the service according to the received configuration information.

### BRIEF DESCRIPTION OF THE DRAWINGS

The invention is illustrated by way of example and not limitation in the accompanying figures in which like numeral references refer to like elements, and wherein:
Figure 1 is a block diagram illustrating an exemplary embodiment of a network environment implementing an embodiment of the present invention;
Figure 2 is a block diagram illustrating one embodiment of a service provider site including one embodiment of a configuration application;
Figure 3 is a timing diagram illustrating the operation of one embodiment of the configuration application according to the present invention; and
Figure 4 is a flow diagram illustrating the operation of one embodiment of a server including one embodiment of the configuration application according to the present invention.

### DETAILED DESCRIPTION OF THE INVENTION

In the following detailed description, numerous specific details are set forth in order to provide a thorough understanding of the invention. However, it will be apparent to one of ordinary skill in the art that these specific details need not be used to practice the invention. In other instances, well known structures, interfaces, and processes have not been shown in detail in order not to obscure unnecessarily the invention.

A hardware "plug-in"-type mechanism to enable interaction with a network-based site is described. The plug-in(s) is responsible for communication between a user's hardware and browser and an application residing on a network-based site. The plug-in(s) take the place of a separate application for integrating user hardware, particularly peripheral devices such as webcams, audio playback and recording equipment and the like, with network-based services. Thus, the plug-in(s) simplify the way the application may be integrated in network-based sites, and allows design of hardware independent network applications.

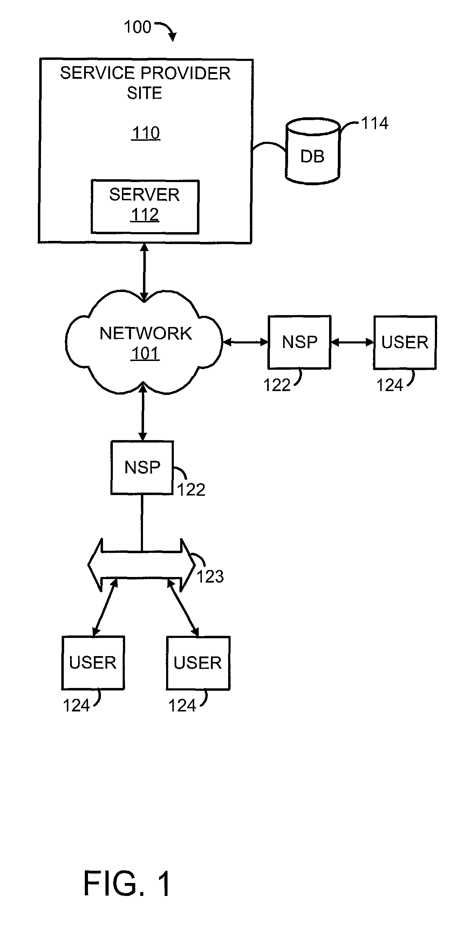

Fig. 1 is a block diagram illustrating one embodiment of a network environment implementing a network-based site 110 offering a network-based service for use with user hardware. Network environment 100 may include a network 101, a service provider site 110, network service providers 122 and users 124. Service provider ("SP") site 110 may include a server 112, and may be coupled to a database 114. The network 101 may include the Internet or any other network such as a local area network ("LAN"), a wide area network ("WAN"), etc.

The network site 110 may include a server 112 for providing information, such as, for example, web pages, to users of network 101. The server 112 may be configured to provide application and/or data services to the users. The server 112 may include, for example, a workstation running a Microsoft Windows™ NT™ operating system, a Windows™ 2000 operating system, a Unix™ operating system, a Linux™ operating system, or another similar or known operating system or platform.

The network site 110 may also be connected to a database 114. In Fig. 1, the database 114 is shown outside the network site 110 for illustrative purposes only. In one embodiment, the database 114 may be included with the network site 110. The database 114 may be, include or interface to, for example, an Oracle™ relational database such as sold commercially by Oracle Corporation, an Informix™ database, a Database 2 (DB2) database, a Sybase™ database, etc. The database may also include or interface to another data storage or query format, platform or resource such as an On Line Analytical Processing (OLAP) platform, a Standard Query Language (SQL) platform, a storage area network (SAN) platform, or a Microsoft Access™ database. The database may be supported by a server or other resources, and may include redundancy, such as a redundant array of independent disks (RAID), for data protection.

Network service providers ("NSPs") 122 provide communications between client systems 124 and network 101, the clients 124 being connected to network 101 through network service provider 122. In one embodiment, clients 124 may be connected to network service provider 122 through another network 123. Network service providers 122 and network site 110 are connected to the network 101 through suitable communications links. In one embodiment, a user 124 may be connected to a network 101 through a communications link. Communications link 125 may include or interface to any one or more of the Internet, an intranet, a Local Area Network (LAN), a Wide Area Network (WAN), etc.

User systems 124 may be or include a client system. A client may include, for example, a personal computer running a Microsoft Windows™ based operating system, a PalmOS™ operating system, a Unix operating system, a Linux operating system, etc.

The client, or user system 124, would normally include a microprocessor such as an Intel x86-based device, an Advanced Micro Devices x86-compatible device, a Motorola 68K device, etc, electronic memory such as a random access memory (RAM) or an electronically programmable read only memory (EPROM), a storage device such as a hard drive and other associated components connected over an electronic bus, as will be appreciated by persons skilled in the art.

The user system 124 may be equipped with an integral or a connectable cathode ray tube (CRT), a liquid crystal display (LCD), an electroluminescent display, a light emitting diode (LED) or another display screen, panel or device for viewing and manipulating files, data and other resources using a graphical user interface (GUI) or a command line interface (CLI). The user system 124 may also be any other kind of network-enabled appliance or device that may be interfaced with a network, such as a WebTV™ unit, a radio-enabled Palm™ Pilot or a similar unit, etc.

The users 124 and SP site 110 may communicate with each other and other network sites and components using network enabled code. Network enabled code may include, for example, an Internet Protocol (IP) code, Hypertext Markup Language (HTML) browser and other network-enabled code known to those of ordinary skill in the art.

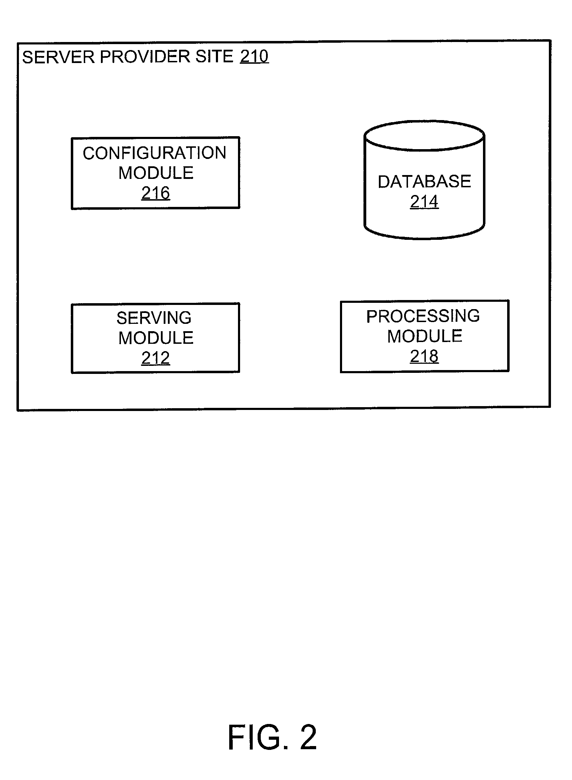

Fig. 2 is a block diagram illustrating one embodiment of a SP site 210 including one embodiment of a configuration application according to the present invention. In the embodiment shown, SP site 210 includes a serving module 212, a database 214, a configuration module 216 and a processing module 218.

Database 214 is arranged to store web page configurations, service-related information, configuration-related information and any other information that may be used to perform configuration of hardware for the services available through SP site 210. Although the database 214 is shown to be a part of SP site 210, the database 214 may reside within or outside of SP site 210, as described above.

Serving module 212 includes suitable serving software configured to serve at least one web page upon request by a user 124, and to interface with a user system 124 through a user browser. The serving module 212 may further be configured to serve at least one web page including a hardware compatibility link. The hardware compatibility link may trigger or launch the plug-in which interfaces to the hardware. The hardware may configure itself according to information contained in the web-page.

For instance, a HTML page may contain the embedded object "webcam plug-in" which contains the following parameters:
ftp://server/mypicture
refresh rate = 5

The page may also contain the button 'take photo' and an image which is initially blank. When the user browses this page, the browser launches the webcam plug-in, the plug-in interprets the configuration information - "refresh rate = 5" - and sends to the ftp site a new image every 5 seconds. If the user presses the 'take photo' button, the server copies the current image to replace the blank image in the page.

In some embodiments, the hardware compatibility link may, in addition, contain or trigger software to query a user browser regarding hardware residing on a user system 124.

In such embodiments, configuration module 216 may include a configuration application. The configuration application may be configured to receive user hardware information from the user system 124 through a user browser via a suitable protocol. The configuration application may further be designed to configure itself to interact with user hardware according to the received user hardware information. The configuration application may also be able to control the user hardware based on the received hardware information.

The processing module 218 receives and executes instructions to be carried out on SP site 210. For example, the processing module 218 is arranged to execute instructions received from configuration module 216, serving module 212 and database 214.

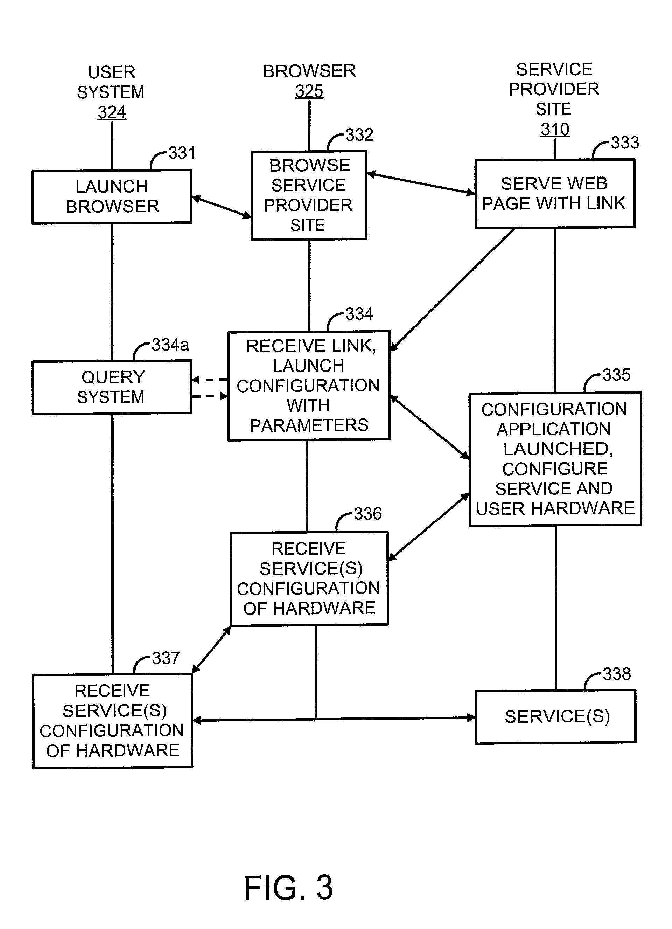

Fig. 3 is a timing diagram illustrating one embodiment of the operation of the configuration application of Fig. 2. The timing diagram illustrates the interactions between a user system 324, a user browser 325 and a SP site 310.

At point 331 of the timing diagram, the user system 324 launches browser 325. The browser 325 may include any suitable network or Internet browsing application, such as, for example, Microsoft Internet Explorer™, Netscape Navigator™, etc.

At point 332, the browser 325 browses a SP site 310 upon receiving instructions from user system 324. The instructions may include a user entering a network or web address, selecting a network link to the SP site 310, for instance, or any other technique of instructing the browser to browse the SP site 310. The browser 325 may be part of user system 324.

At point 333, SP site 310 serves a web page to the browser 325 on user system 324. The web page may include a link that triggers a plug-in associated with the browser and that enables access to a particular piece of user hardware, such as a webcam. In some embodiments, the link may also enable functionality through which SP site 310 may gain information regarding user hardware required or desirable to use with SP site 310. The link may include contents of a file or a parameter of an embedded object or any other instrument that may be used to obtain hardware information from user system 324.

At point 334, browser 325 receives the link from SP site 310. Receiving the link includes receiving the web page with the link contained in the web page. Functionality associated with the link may then query the user system 324 through the browser 325 for hardware parameters relating to hardware for use with SP site 310.

By receiving the link, the browser 325 launches the plug-in(s) that are responsible for accessing the hardware of the user system 324 at a low level. The plug-in may use information contained in the web-page to configure the hardware concerned. Moreover, in some embodiments, the plug-ins may send the server information using a suitable protocol. The information provided by the web page, may include, for instance, the rate at which the service is configured to receive images from, for instance, a webcam. The information provided by the plug-ins may include, for the example of a camera, the byte rate at which the picture may be transmitted or the maximum pictures per second rate maximum. If the plug-in(s) are not present, the browser 325 will not be able to acknowledge the link and the server 212 will not be able to serve the service offered by SP site 310. In one embodiment, the server 212 may be made aware of the error of the plug-in(s) not being present.

If the browser is able to launch the plug-in(s), the browser 325 may obtain the hardware information by querying user system 320 using the plug-in(s). Point 334a corresponds to parsing the link and establishing a relation, at least in terms of service capabilities, between the user system's 324 hardware and the SP site 310. The browser 325 may then launch the configuration application at SP site 310 by providing the service site 310 with hardware parameters requested by the link.

At point 335, the configuration application may be launched at SP site 310. The configuration application may configure the service to be provided to user system 320, at point 335. At point 336, the browser 325 receives service(s) or service functions from SP site 310. Services may include services defined or requested by the user. For example, if the SP site 310 is a photography related site, the services may include sending an image every 5 seconds, start recording, stop recording, take a snapshot, zoom, adjust color, etc. At point 337, the user system may receive the service(s) through browser 325. In one embodiment, the site 310 may transmit a link to browser 325 for each available service or function. Each available service available to the user may be presented to the user some type of HTML control, such as a button or javascript, to manipulate the user hardware.

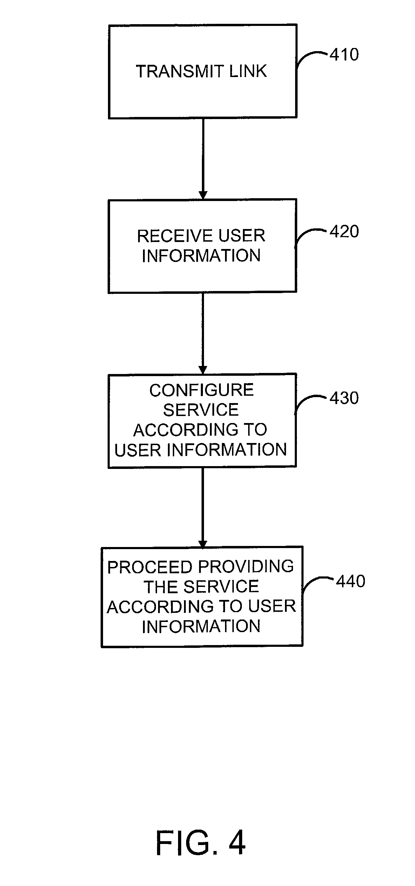

Fig. 4 is a flow diagram illustrating one embodiment of the operation of a SP site 310 including a configuration application. Although the process for operating a SP site 310 is described with reference to specific steps, it will be appreciated that the process described does not require all of the steps listed and the order of the steps may vary depending on design.

At step 410, the SP site 310 transmits a link to a user system 324. In one embodiment, transmitting the link to the user system 324 would include serving a web page including the link in response to the user requesting access to the web page, as described above with reference to Fig. 3. As described above, the link triggers the launching of a plug-in at the browser and may describe how a configuration application for configuring user hardware should interact with the server 112. As discussed above, with reference to Fig. 3, the link may include or reference contents of a file or a parameter of an embedded object.

At step 420, the SP site 310 may receive user information from the browser 325. The user information may include hardware information from the user system. In one embodiment, the user browser may interpret the transmitted link from the SP site 310, obtain hardware information 334a and transmit the hardware information 334 to the server 112.

Operation of the service provider site 310 may also include transmitting information received from the user browser to the configuration application for the configuration application to use in providing service to the user. Thus, the serving module 212 may receive the configuration information from the user browser 325, and transmit the information to the configuration module 216.

In one embodiment, receiving the hardware information may include receiving user-defined hardware information. For example, if the hardware to be used with the service is a WebCam, the user-defined hardware information may include a desire for the hardware to take a picture every five seconds. In one embodiment, the user may supply hardware configuration information by selecting buttons provided on a page through browser 325.

At step 430, the SP site 310 may configure the service provided according to the received user information. In one embodiment, configuration of the service provided may include configuring the user hardware to interact with SP site 310. Configuring the service may further include configuring the configuration application based on the hardware information received from the user. Configuring the service may also include launching the configuration application.

For example, a webcam may communicate to the server that it has the ability to send a picture at a higher rate - say every 2 seconds - in which case the server may update the configuration information to take advantage of this enhanced refresh rate.At step 440, the SP site 310 proceeds in providing the service according to the user hardware information received.

In one embodiment, operation of the SP site 310 may further include controlling the user hardware through the configuration application as described above with respect to point 338. User hardware may include hardware usable with the services offered by SP site 310. For example, user hardware may include a digital camera, a microphone, other sound recording equipment, or any other type of peripheral device.

The operation of the SP site 310 may also include providing services to user system 324 through control of the user hardware by configuration application. As described above, with reference to Figure 3, these services, for a photography site, may include sending images at a predetermined or user defined rate, beginning or ending recording, taking still photos, etc.

The invention described may be compiled into computer programs (e.g., software residing at the SP site 310). These computer programs can exist in a variety of forms both active and inactive. For example, the computer program can exist as software comprised of program instructions or statements in source code, object code, executable code or other formats. Any of the above can be embodied on a computer readable medium, which include storage devices and signals, in compressed or uncompressed form. Exemplary computer readable storage devices include conventional computer system RAM (random access memory), ROM (read only memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the computer program can be configured to access, including signals downloaded through the Internet or other networks. Concrete examples of the foregoing include distribution of executable software program(s) of the computer program on a CD-ROM or via Internet download. In a sense, the Internet itself, as an abstract entity, is a computer readable medium. The same is true of computer networks in general.

While this invention has been described in conjunction with the specific embodiments thereof, it is evident that many alternatives, modifications and variations will be apparent to those skilled in the art. For example, the configuration application may configure a microphone or other sound recording component. Also, it will be apparent to one of ordinary skill that the configuration application may be used with services, which may not necessarily communicate over the Internet, but communicate with other entities through private networks and/or the Internet. These changes and others may be made without departing from the spirit and scope of the invention.

## Claims

1. A method of providing a network-based service to a user system having associated therewith user hardware for using the service and a user browser, comprising:
transmitting (410) to the user browser (325) a link for launching a plug-in for configuring the user hardware according to configuration information associated with the link;
configuring (430) a service according to the configuration information; and
providing (440) a service using the user hardware.

2. The method of claim 1 further comprising controlling the user hardware to interact with the service.

3. A method as claimed in claim 1 or claim 2 wherein the link serves to request information regarding the user hardware and the step of configuring the service further comprises configuring the service based (334) on information received from the user hardware.

4. A method as claimed in claim 3 wherein transmitting the link comprises at least one of serving a web page (333) including the link in response to the user requesting access (332) to the web page and transmitting one of contents of a file and a parameter of an embedded object (333), and
wherein the user browser (325) interprets the transmitted link (334), obtains the hardware information (334a) and transmits the hardware information to a server of the service (334).

5. A method as claimed in any preceding claim wherein transmitting the link comprises transmitting a link (333) describing how a plug-in application for the user hardware should interact with a server for the service.

6. A method as claimed in any preceding claim wherein the user hardware is a peripheral.

7. A system for providing a network-based service, comprising:
a server (112) serving at least one web page including a hardware compatibility link to a user browser and interfacing with a user browser; and
a configuration application (216) configured to receive user hardware information from the user browser (325) and configure itself to interact with the user hardware according to the received hardware information.

8. A system as claimed in claim 7 wherein the configuration application is further configured to control the user hardware based on the received hardware information.

9. A system as claimed in claim 7 or claim 8 wherein the hardware compatibility link comprises information describing how the plug-in application should interact with the server.

10. A system as claimed in any of claims 7 to 9 wherein the hardware compatibility link comprises at least one of a content of a file and a parameter of an embedded object.

11. A user system for use with a network-based service having associated therewith user hardware for using the service, the user system comprising:
a plug-in for configuring the user hardware according to configuration information associated with a link;
a user browser responsive to browsing the link to launch the plug-in.

12. A user system as claimed in claim 11 wherein the plug-in comprises program code elements for providing information to a server associated with the network based service.

13. A user system as claimed in claim 11 or claim 12 wherein the user hardware is a peripheral.
